# EUROPÄISCHE PATENTSCHRIFT

(11) **EP 4 320 713 B1**
(45) Veröffentlichungstag und Bekanntmachung des Hinweises auf die Patenterteilung: **01.07.2026**
(21) Anmeldenummer: 22711148.1
(22) Anmeldetag: 08.03.2022
(51) Int. Cl.: H02K 5/22, H02K 9/197, H02K 16/04, H02K 21/24

(54) **ELEKTRISCHE MASCHINE**
ELECTRIC MACHINE
MACHINE ÉLECTRIQUE

(30) Priorität: 10.04.2021 DE 102021108950
(43) Veröffentlichungstag der Anmeldung: 14.02.2024
(73) Patentinhaber: Schaeffler Technologies AG & Co. KG, 91074 Herzogenaurach (DE)
(72) Erfinder: RIEß, Stefan, 86916 Kaufering (DE); MENHART, Michael, 86859 Igling (DE); OSWALD, Johann, 82438 Eschenlohe (DE); SONNTAG, Carsten, 82131 Gauting-Königswiesen (DE)
(74) Vertreter: Schaeffler Technologies
(86) Internationale Anmeldenummer: PCT/DE2022/100183
(87) Internationale Veröffentlichungsnummer: WO 2022/214122

(56) Entgegenhaltungen:
- EP-A2- 1 367 690
- WO-A1-2019/241765

## Beschreibung

Die vorliegende Erfindung betrifft eine elektrische Maschine, insbesondere Axialflussmaschine, umfassend einen relativ zu einem Stator drehbar in einem Trockenraum gelagerten Rotor, wobei der Rotor eine Rotorwelle mit zumindest einem ersten scheibenförmig ausgebildeten, auf der Rotorwelle dreh- und verschiebefest angeordneten, Rotorkörper aufweist, wobei der Stator einen ersten ringscheibenförmigen Statorkörper und einen zweiten ringscheibenförmigen Statorkörper umfasst, welche koaxial zueinander und zu der Rotorwelle angeordnet sowie axial unter Zwischenanordnung des Rotors voneinander beabstandet sind und der erste Statorkörper eine erste Statorwicklung und der zweite Statorkörper eine zweite Statorwicklung aufweist, wobei die erste Statorwicklung innerhalb eines ersten Hydraulikraums und die zweite Statorwicklung innerhalb eines zweiten Hydraulikraums angeordnet ist, innerhalb derer die jeweiligen Statorwicklungen, jeweils von einem Hydraulikfluid zumindest abschnittsweise kontaktierbar sind.

Bei Kraftfahrzeugen werden für den Antrieb verstärkt Elektromotoren eingesetzt, um Alternativen zu Verbrennungsmotoren zu schaffen, die fossile Brennstoffe benötigen. Um die Alltagstauglichkeit der Elektroantriebe zu verbessern und zudem den Benutzern den gewohnten Fahrkomfort bieten zu können, sind bereits erhebliche Anstrengungen unternommen worden.

Eine ausführliche Darstellung zu einem Elektroantrieb ergibt sich aus einem Artikel der Zeitschrift ATZ 113. Jahrgang, 05/2011, Seiten 360-365 von Erik Schneider, Frank Fickl, Bernd Cebulski und Jens Liebold mit dem Titel: Hochintegrativ und Flexibel Elektrische Antriebseinheit für E-Fahrzeuge. In diesem Artikel wird eine Antriebseinheit für eine Achse eines Fahrzeugs beschrieben, welche einen E-Motor umfasst, der konzentrisch und koaxial zu einem Kegelraddifferenzial angeordnet ist, wobei in dem Leistungsstrang zwischen Elektromotor und Kegelraddifferenzial ein schaltbarer 2-Gang-Planetenradsatz angeordnet ist, der ebenfalls koaxial zu dem E-Motor bzw. dem Kegelraddifferenzial oder Stirnradifferential positioniert ist. Die Antriebseinheit ist sehr kompakt aufgebaut und erlaubt aufgrund des schaltbaren 2-Gang-Planetenradsatzes einen guten Kompromiss zwischen Steigfähigkeit, Beschleunigung und Energieverbrauch. Derartige Antriebseinheiten werden auch als E-Achsen oder elektrisch betreibbarer Antriebsstrang bezeichnet.

Neben den rein elektrisch betriebenen Antriebssträngen sind auch hybride Antriebsstränge bekannt. Derartige Antriebsstränge eines Hybridfahrzeuges umfassen üblicherweise eine Kombination aus einer Brennkraftmaschine und einem Elektromotor und ermöglichen - beispielsweise in Ballungsgebieten - eine rein elektrische Betriebsweise bei gleichzeitiger ausreichender Reichweite und Verfügbarkeit gerade bei Überlandfahrten. Zudem besteht die Möglichkeit, in bestimmten Betriebssituationen gleichzeitig durch die Brennkraftmaschine und den Elektromotor anzutreiben.

Bei der Entwicklung der für E-Achsen oder Hybridmodule vorgesehenen elektrischen Maschinen besteht ein anhaltendes Bedürfnis daran, deren Leistungsdichten zu steigern, so dass der hierzu notwendigen Kühlung der elektrischen Maschinen wachsende Bedeutung zukommt. Aufgrund der notwenigen Kühlleistungen haben sich in den meisten Konzepten Hydraulikflüssigkeiten, wie Kühlöle, zum Abtransport von Wärme aus den thermisch beaufschlagten Bereichen einer elektrischen Maschine durchgesetzt.

Die Mantelkühlung sowie die Wickelkopfkühlung sind beispielsweise aus dem Stand der Technik für die Realisierung einer Kühlung von elektrischen Maschinen mittels Hydraulikflüssigkeiten bekannt. Während die Mantelkühlung die entstehende Wärme an der äußeren Oberfläche des Statorblechpakets in einen Kühlkreislauf überträgt, erfolgt bei der Wickelkopfkühlung der Wärmeübergang direkt an den Leitern außerhalb des Statorblechpakets im Bereich der Wickelköpfe in das Fluid.

Weitere Verbesserungen bieten getrennt ausgeführte Kühlkanäle, welche sowohl in das Blechpaket des Stators (siehe z. B. EP3157138 A1) als auch in die Nut zusätzlich zu den Leitern eingebracht werden (siehe z. B. Markus Schiefer: Indirekte Wicklungskühlung von hochausgenutzten permanenterregten Synchronmaschinen mit Zahnspulenwicklung, Dissertation, Karlsruher Institut für Technologie (KIT), 2017).

Es sind auch Konzepte bekannt, bei denen die Wicklungen direkt mit Hydraulikflüssigkeit umströmt werden, um die Leistungsdichte zu erhöhen. Eine verbesserte Kühlung mit direktem Kontakt von Hydraulikflüssigkeit und Leiter in der Nut ist bereits grundsätzlich aus dem Stand der Technik bekannt. So beschreibt beispielsweise DE102015013018 A1 eine Lösung für elektrische Maschinen mit Einzelzahnwicklung, wobei das Fluid direkt die Wicklungen, welche um die Zähne gewickelt sind, umströmt.

Aus der EP 1 367 690 A2 ist eine elektrische Maschine gemäß dem Oberbegriff des Anspruchs bekannt.

Bezüglich weiteren Standes der Technik wird auf die WO 2019/241765 A1 verwiesen.

Die Aufgabe der Erfindung ist es, eine elektrische Maschine bereitzustellen, die eine hohe Leistungsdichte durch eine optimierte Kühlung und optimierte elektromagnetische Ausgestaltung aufweist und gleichzeitig besonders kompakt sowie montagefreundlich ausgestaltet ist.

Diese Aufgabe wird gelöst durch eine elektrische Maschine, insbesondere Axialflussmaschine, umfassend einen relativ zu einem Stator drehbar in einem Trockenraum gelagerten Rotor, wobei der Rotor eine Rotorwelle mit zumindest einem ersten scheibenförmig ausgebildeten, auf der Rotorwelle dreh- und verschiebefest angeordneten, Rotorkörper aufweist, wobei der Stator einen ersten ringscheibenförmigen Statorkörper und einen zweiten ringscheibenförmigen Statorkörper umfasst, welche koaxial zueinander und zu der Rotorwelle angeordnet sowie axial unter Zwischenanordnung des Rotors voneinander beabstandet sind und der erste Statorkörper eine erste Statorwicklung und der zweite Statorkörper eine zweite Statorwicklung aufweist, wobei die erste Statorwicklung innerhalb eines ersten Hydraulikraums bzw. Nassraums und die zweite Statorwicklung innerhalb eines zweiten Hydraulikraums bzw. Nassraums angeordnet ist, innerhalb derer die jeweiligen Statorwicklungen jeweils von einem Hydraulikfluid zumindest abschnittsweise kontaktierbar sind, wobei die erste Statorwicklung aus dem ersten Statorkörper austretende erste Wicklungsenden aufweist, welche sich radial oberhalb des Statorkörpers in axialer Richtung erstrecken, und die zweite Statorwicklung aus dem zweiten Statorkörper austretende zweite Wicklungsenden aufweist, welche sich radial oberhalb des ersten Statorkörpers und des zweiten Statorkörpers in axialer Richtung erstrecken.

Durch die erfindungsgemäße elektrische Maschine, insbesondere elektrische Axialflussmaschine, kann in vorteilhafter Weise der Maschinenbauraum durch eine rein axiale oder größtenteils axiale Anbindung der Phasenanschlüsse minimiert werden. Durch die axiale Anbindung ist die Durchführung der Wicklungsenden der Statoren in der elektrischen Maschine ebenfalls axial ausgeführt, wodurch diese parallel oder annähernd parallel zur Maschinenhauptachse verlaufen. Die Maschinenhauptachse wird dabei durch die Rotationsache der Lager gebildet. Während der Montage können ferner in vorteilhafter Weise beim Zusammenschieben der Statorkörper die Wicklungsenden der Statorwicklungen durch lokale axiale Freistellungen der elektrischen Maschine geführt sein. Die Verbindungsstellen der Wicklungsenden der Statoren sind in besonders bevorzugter Weise rein axial bzw. größtenteils axial angeordnet. Ferner können in einer vorteilhaften Weiterentwicklung der Erfindung stirnseitig angeordnete Verbindungsleiter die einzelnen Phasen mit den Phasenanschlüssen der elektrischen Maschine verbinden. Diese Maßnahmen führen zu einer Reduzierung des Bauraums der erfindungsgemäßen elektrischen Maschine gegenüber dem Stand der Technik und zugleich zu einer einfachen Montage der elektrischen Maschine inklusive der Verbindung der Wicklungsenden.

Erfindungsgemäß verlaufen somit die Wicklungsenden der elektrischen Maschine somit in der Art, dass im Zusammenbau die Wicklungsenden parallel bzw. annähernd parallel zur Maschinenhauptachse orientiert sind. Die Wicklungsenden werden bei der Montage in bevorzugter Weise durch dafür vorgesehene und entsprechend ausgebildete lokale Freimachungen der elektrischen Maschine zu einer der Stirnseiten der elektrischen Maschine geführt und nach dem entsprechenden axialen Zusammenschieben der entsprechenden Maschinenteile geeignet elektrisch und mechanisch verbunden. Die so verbundenen Wicklungsenden der Statoren werden in besonders bevorzugter Weise stirnseitig über Verbindungsleiter zu den axial positionierten Phasenanschlüssen geführt.

Diese Verbindungsleiter können durch Wicklungsenden nahtlos an die Wicklung anschließen oder an die Wicklung geeignet elektrisch und mechanisch angeschlossen sein. Der Sternpunkt bzw. die Sternpunkte der elektrischen Maschine werden bevorzugt dabei nicht bis zum Phasenanschluss ausgeführt.

Zunächst werden die einzelnen Elemente des beanspruchten Erfindungsgegenstandes in der Reihenfolge ihrer Nennung im Anspruchssatz erläutert und nachfolgend besonders bevorzugte Ausgestaltungen des Erfindungsgegenstandes beschrieben.

Elektrische Maschinen dienen zur Umwandlung elektrischer Energie in mechanische Energie und/oder umgekehrt, und umfassen in der Regel einen als Stator, Ständer oder Anker bezeichneten ortsfesten Teil sowie einen als Rotor oder Läufer bezeichneten und gegenüber dem ortsfesten Teil beweglich angeordneten Teil. Im Falle von als Rotationsmaschinen ausgebildeten elektrischen Maschinen wird insbesondere zwischen Radialflussmaschinen und Axialflussmaschinen unterschieden. Dabei zeichnet sich eine Radialflussmaschine dadurch aus, dass die Magnetfeldlinien in dem zwischen Rotor und Stator ausgebildeten Luftspalt sich in radialer Richtung erstrecken, während im Falle einer Axialflussmaschine sich die Magnetfeldlinien in dem zwischen Rotor und Stator gebildeten Luftspalt in axialer Richtung erstrecken. Die erfindungsgemäße elektrische Maschine kann als Axialflussmaschine oder Radialflussmaschine ausgebildet sein.

Der Stator der elektrischen Maschine kann insbesondere als Stator für eine Radialflussmaschine ausgebildet sein. Der Stator einer Radialflussmaschine ist üblicherweise zylindrisch aufgebaut und besteht bevorzugt aus gegeneinander elektrisch isolierten und geschichtet aufgebauten und zu Blechpaketen paketierten Elektroblechen. Über den Umfang verteilt, können in das Elektroblech parallel zur Rotorwelle verlaufend angeordnet Nuten und/oder Kanäle eingelassen sein, welche die Statorwicklung bzw. Teile der Statorwicklung aufnehmen. Der für eine Radialflussmaschine ausgebildete Stator kann als Stator für einen Innenläufer oder Außenläufer ausgebildet sein. Bei einem Innenläufer erstrecken sich beispielsweise die Statorzähne radial nach innen, während sie sich bei einem Außenläufer radial nach außen erstrecken.

Die erfindungsgemäße elektrische Maschine ist insbesondere für die Verwendung innerhalb eines Antriebsstrangs eines hybrid- oder vollelektrisch angetriebenen Kraftfahrzeugs vorgesehen. Insbesondere ist die elektrische Maschine so dimensioniert, dass Fahrzeuggeschwindigkeiten größer als 50 km/h, vorzugsweise größer als 80 km/h und insbesondere größer als 100 km/h erreicht werden können. Besonders bevorzugt weist die elektrische Maschine eine Leistung größer als 30 kW, vorzugsweise größer als 50 kW und insbesondere größer als 70 kW auf. Es ist des Weiteren bevorzugt, dass die elektrische Maschine Drehzahlen größer als 5.000 U/min bzw. 1/min, besonders bevorzugt größer als 10.000 U/min, ganz besonders bevorzugt größer als 12.500 U/min bereitstellt.

Eine Statorwicklung ist ein elektrisch leitfähiger Leiter, dessen Längenerstreckung wesentlich größer ist als seine Erstreckung senkrecht zur Längserstreckung. Die Statorwicklung kann grundsätzlich jede beliebige Querschnittsform aufweisen. Bevorzugt sind rechteckige Querschnittsformen, da sich mit diesen hohe Packungs- und folglich Leistungsdichten erzielen lassen. Ganz besonders bevorzugt ist eine Statorwicklung aus Kupfer gebildet. Bevorzugt weist eine Statorwicklung eine Isolierung auf. Zur Isolierung der Statorwicklung kann beispielsweise Glimmerpapier, welches aus mechanischen Gründen durch einen Glasgewebeträger verstärkt sein kann, in Bandform um eine oder mehrere Statorwicklungen gewickelt sein, welche mittels eines aushärtenden Harzes imprägniert sind. Grundsätzlich ist es auch möglich, ein aushärtbares Polymer oder eine Lackschicht ohne ein Glimmerpapier zu verwenden, um eine Statorwicklung zu isolieren.

Gemäß einer vorteilhaften Ausgestaltung der Erfindung kann vorgesehen sein, dass die elektrische Maschine als Axialflussmaschine ausgebildet ist, umfassend den relativ zu dem Stator drehbar in einem Trockenraum gelagerten Rotor, wobei der Rotor die Rotorwelle mit zumindest dem ersten scheibenförmig ausgebildeten, auf der Rotorwelle dreh- und verschiebefest angeordneten Rotorkörper aufweist, wobei der Stator den ersten ringscheibenförmigen Statorkörper und den zweiten ringscheibenförmigen Statorkörper umfasst, welche koaxial zueinander und zu der Rotorwelle angeordnet und axial unter Zwischenanordnung des Rotors voneinander beabstandet sind. Der Vorteil dieser Ausgestaltung liegt darin, dass die elektrische Maschine so axial sehr kompakt bauend ausgebildet werden kann.

Der magnetische Fluss in einer derartigen elektrischen Axialflussmaschine (AFM), wie beispielsweise einer als Axialflussmaschine ausgebildeten elektrischen Antriebsmaschine eines Kraftfahrzeugs, ist im Luftspalt zwischen Stator und Rotor axial zu einer Rotationsrichtung des Rotors der Axialflussmaschine gerichtet. Es existieren unterschiedliche Typen von Axialflussmaschinen. Ein bekannter Typ ist eine sogenannte I-Anordnung, bei der der Rotor axial neben einem Stator oder zwischen zwei Statoren angeordnet ist. Ein anderer bekannter Typ ist eine sogenannte H-Anordnung, bei der zwei Rotoren auf gegenüberliegenden axialen Seiten eines Stators angeordnet sind. Im Zusammenhang mit der vorliegenden Erfindung ist eine I-Anordnung bevorzugt.

Die elektrische Maschine kann bevorzugt auch ein hydraulisches Verbindungselement umfassen, welches den ersten Hydraulikraum hydraulisch mit dem zweiten Hydraulikraum verbindet, wobei innerhalb des hydraulischen Verbindungselements wenigstens ein elektrischer Leiter der ersten Statorwicklung und/oder der zweiten Statorwicklung angeordnet ist. Das hydraulische Verbindungselement kann eine beliebige geschlossene Querschnittsgeometrie aufweisen und beispielsweise als ein Rohr oder ein Schlauch zur Überbrückung von einer oder mehreren Trennfugen zwischen einem ersten Hydraulikraum eines ersten Statorkörpers und eines zweiten Hydraulikraums eines zweiten Statorkörpers ausgebildet sein. Dieses hydraulische Verbindungselement sorgt ferner dafür, dass der elektrische Leiter einer Statorwicklung in diesem geführt und gleichzeitig vom Kühlmittel umspült wird. Dabei kann durch eine geeignete Auswahl des Werkstoffs des hydraulischen Verbindungselements und einer entsprechenden Wandstärke gleichzeitig eine elektrische Isolationswirkung gegenüber elektrisch leitenden Gehäuseteilen erzielt werden. Das hydraulische Verbindungselement kann bevorzugt in vorliegenden Durchbrüchen eingesteckt bzw. eingelegt sein. Darüber hinaus können mit dem hydraulischen Verbindungselement Luft- und Kriechstrecken innerhalb der elektrischen Maschine angepasst werden.

Die Dichtwirkung des hydraulischen Verbindungselements zu angrenzenden Gehäuseteilen kann dabei beispielsweise durch einen definierten Spalt zwischen dem Dichtelement und dem Gehäuse durch Verpressung des hydraulischen Verbindungselements im Dichtbereich mit angrenzenden Gehäuseteilen über ein gesondertes Dichtelement oder einen Dichtstoff erzielt werden. Das Dichtelement kann dabei vorzugsweise auch in das hydraulische Verbindungselement zur abgedichteten und elektrisch isolierten Durchführung integriert sein.

Gemäß einer vorteilhaften Ausgestaltung der Erfindung kann vorgesehen sein, dass der erste Hydraulikraum zumindest abschnittsweise von einem begrenzenden ersten Gehäusebauteil umfasst ist, welches eine Mehrzahl von umfänglich verteilten Öffnungen, zur Durchführung der zweiten Wicklungsenden aufweist.

Es ist gemäß der Erfindung auch vorgesehen, dass die ersten Wicklungsenden auf einer Kreisbahn mit einem ersten Durchmesser angeordnet sind und die zweiten Wicklungsenden auf einer Kreisbahn mit einem zweiten Durchmesser angeordnet sind, wobei der erste Durchmesser von dem zweiten Durchmesser verschieden ist. Es kann hierdurch erreicht werden, dass die Wicklungsenden sich nicht unbeabsichtigt kontaktieren.

Des Weiteren kann es gemäß einer ebenfalls vorteilhaften Ausgestaltung der Erfindung vorgesehen sein, dass die ersten Wicklungsenden und die zweiten Wicklungsenden zur gleichen axialen Stirnseite der Axialflussmaschine hin orientiert sind. Gemäß einer weiteren besonders bevorzugten Ausführungsform der Erfindung kann es vorgesehen sein, dass die ersten Wicklungsenden und die zweiten Wicklungsenden an der gleichen axialen Stirnseite der Axialflussmaschine verschaltet sind, wodurch der Montageaufwand weiter reduziert werden kann.

Des Weiteren kann die Erfindung auch dahingehend weiterentwickelt sein, dass die erste Statorwicklung und die zweite Statorwicklung jeweils mindestens dreiphasig mit einer Sternpunktverschaltung konfiguriert sind.

Zur Bereitstellung einer elektrischen Kontaktierung zwischen einem Nassraum und einem Trockenraum der elektrischen Maschine kann insbesondere bevorzugt wenigstens ein elektrisches Anschlusselement vorgesehen sein. Hierzu besitzt das elektrische Anschlusselement einen Kontaktierungskörper, welcher mittels einer Presspassung in einer Aufnahmehülse fixiert ist. Es kann insbesondere vorgesehen sein, einen in die Aufnahmehülse eingepressten Bolzen oder eine Gewindebuchse als Kontaktierungskörper zu verwenden, dessen Hauptfunktion die Abstützung der Klemmkräfte beispielsweise über den tragenden Querschnitt und einen Hinterschnitt ist. Der Werkstoff des Bolzens bzw. der Gewindebuchse besitzt in vorteilhafter Weise eine höhere mechanische Belastbarkeit (Fließgrenze) als der Werkstoff der Aufnahmehülse. Die Aufnahmehülse ihrerseits weist bevorzugt eine höhere spezifische elektrische Leitfähigkeit verglichen mit dem Kontaktierungskörper auf. Dafür ist der Werkstoff der Aufnahmehülse weicher und hat demnach eine geringere mechanische Belastbarkeit (Fließgrenze) als der Werkstoff des Kontaktierungskörpers.

Der als Bolzen oder Gewindebuchse ausgebildete Kontaktierungskörper wird in bevorzugter Weise so in das Gehäusebauteil eingepresst, dass der weichere Werkstoff elastisch und plastisch umgeformt wird, so dass die Dichtwirkung ausreicht, um die beiden Räume beidseits des Gehäusebauteils gegeneinander bzw. einen Raum gegen die Umwelt abzudichten. Dafür ist insbesondere bevorzugt am Kontaktierungskörper, beispielsweise am Bolzen bzw. der Gewindebuchse, eine Querschnittsaufweitung vorgesehen, welche für die Umformung des weicheren Werkstoffs ausgelegt ist. Der elastische Anteil der Umformung sorgt dabei für die Aufrechterhaltung der Anpressung und der plastische Anteil der Umformung zur Verlängerung der Dichtstrecken im dafür vorgesehenen Bereich. Überschüssiges Material des Gegenstücks wird dabei in einem dafür vorgesehenen Bereich aufgenommen. Gleichzeitig entsteht durch die Querschnittsaufweitung des Kontaktierungskörpers, beispielsweise des Bolzens bzw. der Gewindebuchse, eine Hinterschneidung, die dem Auszug der Aufnahmehülse entgegenwirkt. Der Raum zur Aufnahme des überschüssigen Materials beim Einpressvorgang kann in zu bevorzugender Weise ebenfalls mit zusätzlichen Dichtmitteln oder Dichtelementen bestückt werden und so die Dichtwirkung weiter steigern.

Die Aufnahmehülse mit dem eingepressten Kontaktierungskörper, beispielsweise dem Bolzen bzw. der Gewindebuchse, wird besonders bevorzugt elektrisch isoliert im Gehäusebauteil angebracht. Dafür kann beispielsweise entweder das Gehäusebauteil aus einem elektrisch schlecht leitenden Werkstoff bzw. einem Isolationsstoff gefertigt oder in einen elektrisch nichtleitenden Adapter eingesetzt sein, der die elektrische Isolationswirkung zwischen dem Gehäusebauteil und dem Zusammenbau aus Kontaktierungskörper und Aufnahmehülse realisiert. Die Dichtwirkung kann beispielsweise über Dichtelemente zwischen der Aufnahmehülse und dem angrenzenden Gehäusebauteil oder Adapter erzielt werden.

Nachfolgend wird die Erfindung anhand von Figuren ohne Beschränkung des allgemeinen Erfindungsgedankens näher erläutert werden.

### Es zeigen:

Figur 1 eine elektrische Axialflussmaschine in einer schematischen Axialschnittansicht,
Figur 2 eine elektrische Axialflussmaschine in einer perspektivischen Explosionsdarstellung, und
Figur 3 ein Kraftfahrzeug mit einer elektrischen Maschine in schematischen Blockschaltdarstellungen.

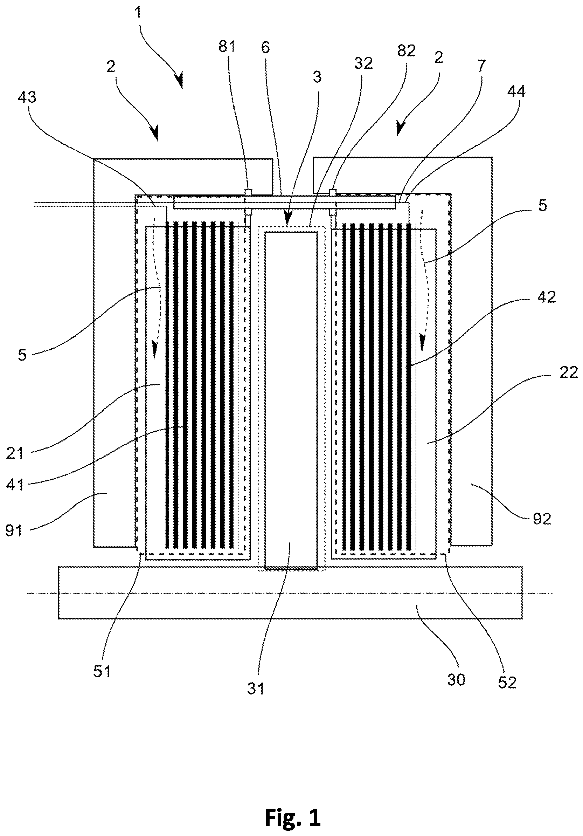

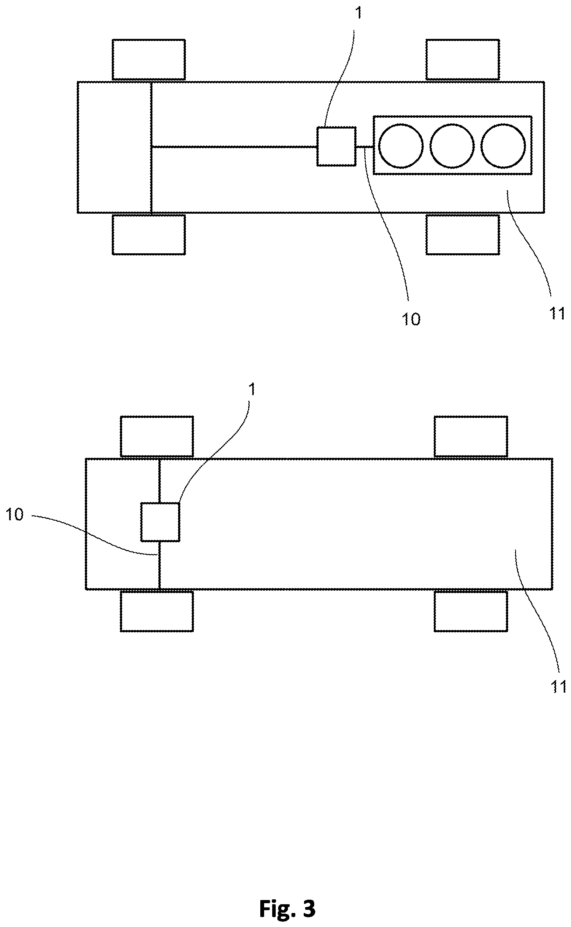

Die Figur 1 zeigt eine elektrische Axialflussmaschine 1 für einen elektrisch betriebenen Antriebsstrang 10 eines Kraftfahrzeugs 11, wie es exemplarisch in der Figur 3 gezeigt ist. In der oberen Darstellung der Figur 3 ist der Antriebsstrang 10 eines hybrid angetriebenen und in der unteren Darstellung eines vollelektrisch angetriebenen Kraftfahrzeugs 11 mit jeweils einer elektrischen Maschine 1 gezeigt.

Die Axialflussmaschine 1 umfasst einen relativ zu einem Stator 2 drehbar in einem Trockenraum 32 gelagerten Rotor 3, wobei der Rotor 3 eine Rotorwelle 30 mit zumindest einem ersten scheibenförmig ausgebildeten, auf der Rotorwelle 30 dreh- und verschiebefest angeordneten, Rotorkörper 31 aufweist. Der Stator 2 seinerseits umfasst einen ersten ringscheibenförmigen Statorkörper 21 und einen zweiten ringscheibenförmigen Statorkörper 22, welche koaxial zueinander und zu der Rotorwelle 30 angeordnet sowie axial unter Zwischenanordnung des Rotors 3 voneinander beabstandet sind.

Der erste Statorkörper 21 besitzt eine erste Statorwicklung 41 und der zweite Statorkörper 22 besitzt eine zweite Statorwicklung 42, wobei die erste Statorwicklung 41 innerhalb eines ersten Hydraulikraums 51 und die zweite Statorwicklung 42 innerhalb eines zweiten Hydraulikraums 52 angeordnet ist, innerhalb derer die jeweiligen Statorwicklungen 41,42 jeweils von einem Hydraulikfluid 5 zumindest abschnittsweise kontaktierbar sind.

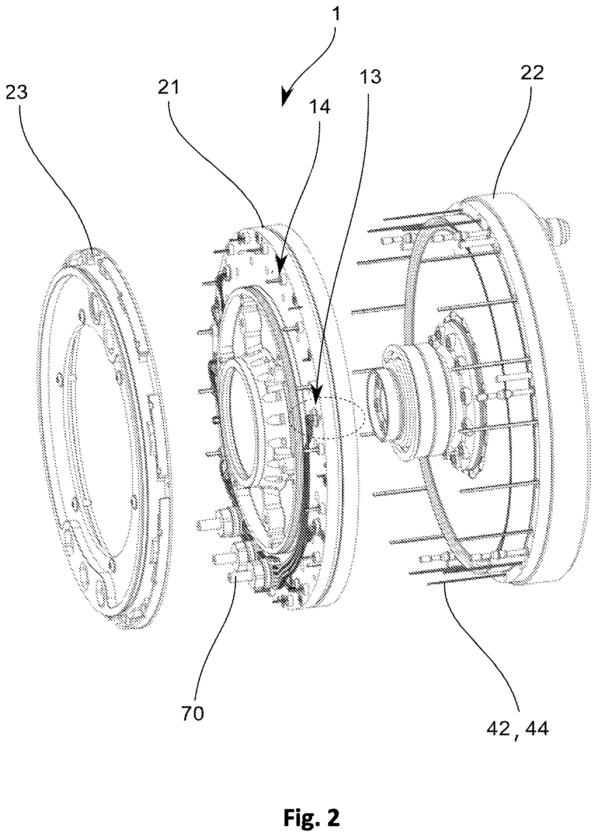

Die erste Statorwicklung 41 weist aus dem ersten Statorkörper 21 austretende erste Wicklungsenden 43 auf, welche sich radial oberhalb des Statorkörpers 21 in axialer Richtung erstrecken. Auch die zweite Statorwicklung 42 besitzt aus dem zweiten Statorkörper 22 austretende zweite Wicklungsenden 44, welche sich radial oberhalb des ersten Statorkörpers 21 und des zweiten Statorkörpers 22 in axialer Richtung erstrecken. Aus der Zusammenschau von Figur 1 mit der Figur 2 ist ferner ersichtlich, dass der erste Hydraulikraum 51 zumindest abschnittsweise von einem begrenzenden ersten Gehäusebauteil 91 umfasst ist, welches eine Mehrzahl von umfänglich verteilten Öffnungen 13,14 zur Durchführung der zweiten Wicklungsenden 44 aufweist.

Die ersten Wicklungsenden 43 sind auf einer Kreisbahn mit einem ersten Durchmesser und die zweiten Wicklungsenden 44 auf einer Kreisbahn mit einem zweiten Durchmesser angeordnet, wobei der erste Durchmesser von dem zweiten Durchmesser verschieden ist.

Die ersten Wicklungsenden 43 und die zweiten Wicklungsenden 44 sind zur gleichen axialen Stirnseite der Axialflussmaschine 1 hin orientiert und an der gleichen axialen Stirnseite der Axialflussmaschine 1 verschaltet. Die erste Statorwicklung 41 und die zweite Statorwicklung 42 sind jeweils mindestens dreiphasig mit einer Sternpunktverschaltung konfiguriert.

Die elektrische Maschine 1 weist ferner eine Mehrzahl von hydraulischen Verbindungselementen 6 auf, welches den ersten Hydraulikraum 51 hydraulisch mit dem zweiten Hydraulikraum 52 verbinden. Innerhalb der hydraulischen Verbindungselemente 6 ist jeweils wenigstens ein elektrischer Leiter 7 der zweiten Statorwicklung 42 angeordnet. Die Mehrzahl von im Wesentlichen identisch ausgeführten hydraulischen Verbindungselementen 6 ist umfänglich verteilt zwischen dem ersten Hydraulikraum 51 und dem zweiten Hydraulikraum 52 angeordnet.

Das hydraulische Verbindungselement 6 ist aus einem elektrisch nichtleitfähigen Material gebildet und weist eine im Wesentlichen zylinderringartige Raumform auf. In der gezeigten Ausführungsform sind die hydraulischen Verbindungselemente 6 radial oberhalb des ersten Statorkörpers 21 und des zweiten Statorkörpers 22 positioniert.

In der Figur 1 ist ferner gezeigt, dass ein hydraulisches Verbindungselement 6 jeweils eine erste Dichtung 81 aufweist, die den ersten Hydraulikraum 51 gegenüber dem Trockenraum 32 des Rotors 2 abdichtet und das hydraulische Verbindungselement 6 eine zweite Dichtung 82 aufweist, die den zweiten Hydraulikraum 52 gegenüber dem Trockenraum 32 des Rotors 2 abdichtet. Die erste Dichtung 81 und die zweite Dichtung 82 sind in dem gezeigten Ausführungsbeispiel als Dichtringe ausgeführt.

Die hydraulischen Verbindungselemente 6 sind jeweils mittels einer Presspassung mit einem den ersten Hydraulikraum 51 zumindest abschnittsweise begrenzenden ersten Gehäusebauteil 91 und mit einem den zweiten Hydraulikraum 52 zumindest abschnittsweise begrenzenden zweiten Gehäusebauteil 92 verbunden.

Die Erfindung ist nicht auf die in den Figuren dargestellten Ausführungsformen beschränkt. Die vorstehende Beschreibung ist daher nicht als beschränkend, sondern als erläuternd anzusehen. Die nachfolgenden Patentansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Patentansprüche und die vorstehende Beschreibung 'erste' und 'zweite' Merkmale definieren, so dient diese Bezeichnung der Unterscheidung zweier gleichartiger Merkmale, ohne eine Rangfolge festzulegen.

### Bezugszeichenliste

1 Axialflussmaschine
2 Stator
3 Rotor
4 Statorwicklung
5 Hydraulikraum
10 Antriebsstrang
11 Kraftfahrzeug
13 Öffnungen
14 Öffnungen
21 Statorkörper
22 Statorkörper
30 Rotorwelle
31 Rotorkörper
32 Trockenraum
41 Statorwicklung
42 Statorwicklung
43 Wicklungsenden
44 Wicklungsenden
51 Hydraulikraums
52 Hydraulikraums
91 Gehäusebauteil

## Patentansprüche

1. Elektrische Maschine (1), insbesondere Axialflussmaschine, umfassend einen relativ zu einem Stator (2) drehbar in einem Trockenraum (32) gelagerten Rotor (3), wobei
der Rotor (3) eine Rotorwelle (30) mit zumindest einem ersten scheibenförmig ausgebildeten, auf der Rotorwelle (30) dreh- und verschiebefest angeordneten, Rotorkörper (31) aufweist,
der Stator (2) einen ersten ringscheibenförmigen Statorkörper (21) und einen zweiten ringscheibenförmigen Statorkörper (22) umfasst, welche koaxial zueinander und zu der Rotorwelle (30) angeordnet sowie axial unter Zwischenanordnung des Rotors (3) voneinander beabstandet sind,
der erste Statorkörper (21) eine erste Statorwicklung (41) und der zweite Statorkörper (22) eine zweite Statorwicklung (42) aufweist,
die erste Statorwicklung (41) innerhalb eines ersten Hydraulikraums (51) und die zweite Statorwicklung (42) innerhalb eines zweiten Hydraulikraums (52) angeordnet ist, innerhalb derer die jeweiligen Statorwicklungen (41,42) jeweils von einem Hydraulikfluid (5) zumindest abschnittsweise kontaktierbar sind,
die erste Statorwicklung (41) aus dem ersten Statorkörper (21) austretende erste Wicklungsenden (43) aufweist, welche sich radial oberhalb des Statorkörpers (21) in axialer Richtung erstrecken, und
die zweite Statorwicklung (42) aus dem zweiten Statorkörper (22) austretende zweite Wicklungsenden (44) aufweist, welche sich radial oberhalb des ersten Statorkörpers (21) und des zweiten Statorkörpers (22) in axialer Richtung erstrecken,
**dadurch gekennzeichnet, dass**
die ersten Wicklungsenden (43) auf einer Kreisbahn mit einem ersten Durchmesser angeordnet sind und die zweiten Wicklungsenden (44) auf einer Kreisbahn mit einem zweiten Durchmesser angeordnet sind, und
der erste Durchmesser von dem zweiten Durchmesser verschieden ist.

2. Elektrische Maschine (1) nach Anspruch 1, **dadurch gekennzeichnet, dass** der erste Hydraulikraum (51) zumindest abschnittsweise von einem begrenzenden ersten Gehäusebauteil (91) umfasst ist, welches eine Mehrzahl von umfänglich verteilten Öffnungen (13,14) zur Durchführung der zweiten Wicklungsenden (44) aufweist.

3. Elektrische Maschine (1) nach Anspruch 1 oder 2, **dadurch gekennzeichnet, dass** die ersten Wicklungsenden (43) und die zweiten Wicklungsenden (44) zur gleichen axialen Stirnseite der Axialflussmaschine (1) hin orientiert sind.

4. Elektrische Maschine (1) nach einem der Ansprüche 1 bis 3, **dadurch gekennzeichnet, dass** die ersten Wicklungsenden (43) und die zweiten Wicklungsenden (44) an der gleichen axialen Stirnseite der Axialflussmaschine (1) verschaltet sind.

5. Elektrische Maschine (1) nach einem der Ansprüche 1 bis 4, **dadurch gekennzeichnet, dass** die erste Statorwicklung (41) und die zweite Statorwicklung (42) jeweils mindestens dreiphasig mit einer Sternpunktverschaltung konfiguriert ist.

## Claims

1. An electric machine (1), in particular an axial flux machine, comprising a rotor (3) rotatably mounted in a dry chamber (32) relative to a stator (2), wherein
the rotor (3) has a rotor shaft (30) with at least one first disk-shaped rotor body (31) arranged on the rotor shaft (30) in a non-rotatable and non-displaceable manner,
the stator (2) comprises a first annular disk-shaped stator body (21) and a second annular disk-shaped stator body (22), which are arranged coaxially to one another and to the rotor shaft (30) and are axially spaced from each other with the rotor (3) arranged therebetween,
the first stator body (21) has a first stator winding (41) and the second stator body (22) has a second stator winding (42),
the first stator winding (41) is arranged within a first hydraulic chamber (51) and the second stator winding (42) is arranged within a second hydraulic chamber (52), within which the respective stator windings (41, 42) can each be contacted by a hydraulic fluid (5) at least in sections,
the first stator winding (41) has first winding ends (43) emerging from the first stator body (21), which extend radially above the stator body (21) in the axial direction, and
the second stator winding (42) has second winding ends (44) emerging from the second stator body (22), which extend radially above the first stator body (21) and the second stator body (22) in the axial direction,
**characterised in that**
the first winding ends (43) are arranged on a circular path with a first diameter and the second winding ends (44) are arranged on a circular path with a second diameter, and
the first diameter is different from the second diameter.

2. The electric machine (1) according to claim 1, **characterised in that** the first hydraulic chamber (51) is enclosed at least in sections by a limiting first housing component (91) which has a plurality of circumferentially distributed openings (13, 14) for the passage of the second winding ends (44).

3. The electric machine (1) according to claim 1 or 2, **characterised in that** the first winding ends (43) and the second winding ends (44) are oriented towards the same axial end face of the axial flux machine (1).

4. The electric machine (1) according to any one of claims 1 to 3, **characterised in that** the first winding ends (43) and the second winding ends (44) are connected at the same axial end face of the axial flux machine (1).

5. The electric machine (1) according to any one of claims 1 to 4, **characterised in that** the first stator winding (41) and the second stator winding (42) are each configured to be at least three-phase with a star point connection.

## Revendications

1. Machine (1) électrique, en particulier machine à flux axial, comprenant un rotor (3) monté dans une chambre sèche (32) de manière rotative par rapport à un stator (2), dans laquelle
le rotor (3) présente un arbre de rotor (30) comportant au moins un premier corps de rotor (31) conçu en forme de disque disposé sur l'arbre de rotor (30) de manière fixe en rotation et en déplacement,
le stator (2) comprend un premier corps de stator (21) en forme de disque annulaire et un second corps de stator (22) en forme de disque annulaire, lesquels sont disposés coaxialement l'un à l'autre et à l'arbre de rotor (30) et lesquels sont espacés axialement l'un de l'autre en intercalant le rotor (3),
le premier corps de stator (21) présente un premier enroulement de stator (41) et le second corps de stator (22) présente un second enroulement de stator (42),
le premier enroulement de stator (41) est disposé dans une première chambre hydraulique (51) et le second enroulement de stator (42) est disposé dans une seconde chambre hydraulique (52), dans lesquelles les enroulements de stator (41, 42) respectifs peuvent respectivement être mis en contact au moins par section par un fluide hydraulique (5),
le premier enroulement de stator (41) présente des premières extrémités d'enroulement (43) faisant saillie du premier corps de stator (21), lesquelles s'étendent radialement au-dessus du corps de stator (21) dans une direction axiale, et
le second enroulement de stator (42) présente des secondes extrémités d'enroulement (44) faisant saillie du second corps de stator (22), lesquelles s'étendent radialement au-dessus du premier corps de stator (21) et du second corps de stator (22) dans une direction axiale,
**caractérisée en ce que**
les premières extrémités d'enroulement (43) sont disposées sur une trajectoire circulaire comportant un premier diamètre et les secondes extrémités d'enroulement (44) sont disposées sur une trajectoire circulaire comportant un second diamètre, et
le premier diamètre est différent du second diamètre.

2. Machine (1) électrique selon la revendication 1, **caractérisée en ce que** la première chambre hydraulique (51) est au moins par section entourée par un premier composant de boîtier (91) limitant, lequel présente une pluralité d'ouvertures (13, 14) réparties circonférentiellement pour faire passer les secondes extrémités d'enroulement (44).

3. Machine (1) électrique selon la revendication 1 ou 2, **caractérisée en ce que** les premières extrémités d'enroulement (43) et les secondes extrémités d'enroulement (44) sont orientées vers la même face frontale axiale de la machine (1) à flux axial.

4. Machine (1) électrique selon l'une quelconque des revendications 1 à 3, **caractérisée en ce que** les premières extrémités d'enroulement (43) et les secondes extrémités d'enroulement (44) sont connectées à la même face frontale axiale de la machine (1) à flux axial.

5. Machine (1) électrique selon l'une quelconque des revendications 1 à 4, **caractérisée en ce que** le premier enroulement de stator (41) et le second enroulement de stator (42) sont respectivement configurés au moins triphasés et comportent une connexion en étoile.
